# EUROPÄISCHE PATENTSCHRIFT

(11) **EP 1 009 647 B1**
(45) Veröffentlichungstag und Bekanntmachung des Hinweises auf die Patenterteilung: **01.12.2004**
(21) Anmeldenummer: 98954166.9
(22) Anmeldetag: 04.09.1998
(51) Int. Cl.: B60R 16/02

(54) **FAHRZEUGTÜR**
AUTOMOBILE DOOR
PORTIERE DE VEHICULE

(30) Priorität: 04.09.1997 DE 19738656
(43) Veröffentlichungstag der Anmeldung: 21.06.2000
(73) Patentinhaber: Brose Fahrzeugteile GmbH & Co. KG, Coburg, 96450 Coburg (DE)
(72) Erfinder: SEEBERGER, Jürgen, D-96148 Baunach (DE); JÜRJENS, Gerhard, D-96450 Coburg (DE)
(74) Vertreter: Baumgärtel, Gunnar, Dr.
(86) Internationale Anmeldenummer: PCT/DE1998/002698
(87) Internationale Veröffentlichungsnummer: WO 1999/011491

(56) Entgegenhaltungen:
- EP-A- 0 131 450
- EP-A- 0 713 807
- DE-A- 3 530 413
- DE-A- 4 126 318
- DE-C- 4 126 345
- HEBERLE K: "SO SCHNELL WIE NOETIG, SO LANGSAM WIE MOEGLICH" ELEKTRONIK, Bd. 41, Nr. 19, 15. September 1992, Seiten 78-83, XP000310285

## Beschreibung

Die Erfindung betrifft eine Fahrzeugtür und eine manuelle Betätigungsvorrichtung zur Ansteuerung elektrischer und/oder elektronischer Komponenten in einem Kraftfahrzeug gemäß den Oberbegriffen der Patentansprüche 1 und 6.

Aus DE 195 09 282 A1 ist eine Fahrzeugtür mit Modulbauweise bekannt, die aus einer Türkarosserie mit einem großen Ausschnitt im Türinnenblech, einer den Ausschnitt verschließenden Trägerplatte mit mehreren vormontierten elektrischen Komponenten und einer mehrteiligen Türinnenverkleidung besteht. Dabei ist vorgesehen, möglichst viele elektrische Komponenten auf der Trägerplatte vorzumontieren, um so eine große vorprüfbare Einheit zu erhalten, und auch einen Teil der Türinnenverkleidung auf der Trägerplatte vorzumontieren. Die verbleibenden Flächen, die erst nach der Montage der Trägerplatte am Türinnenblech von weiteren Teilen der Türinnenverkleidung abgedeckt werden, stehen zum Setzen von Befestigungsmitteln und zum Herstellen von elektrischen Verbindungen, z.B. für eine in der Türinnenverkleidung angebrachten Ausstiegsleuchte, zur Verfügung.

Des weiteren sind in eine aus Elektromotor, Getriebe und Elektronik bestehenden Antriebsund Steuereinheit Schalter zum Betätigen der Fensterheber und der elektrischen Sitzverstellung integriert. Diese Schalter umfassen sämtliche für das Ansteuern der elektrischen Komponenten notwendigen elektrischen Kontaktelemente und mechanischen Bedienelemente (Haptik). Da jedoch die das Design beeinflussende Haptik in der Regel für jeden Anwendungsfall anders zu gestalten ist, entsteht eine große Variantenvielfalt hinsichtlich der Antriebs- und Steuereinheit, was bei einer derart komplexen Baugruppe erhebliche Kosten verursacht.

Der Erfindung liegt deshalb die Aufgabe zugrunde, eine Fahrzeugtür der gattungsgemäßen Art so weiterzubilden, daß die zur manuellen Ansteuerung notwendigen, der Türinnenverkleidung zugeordneten Schalter dem gewünschten Design anpaßbar sind, ohne dabei die Variantenvielfalt anderer Komponenten zu erhöhen, und dennoch auf der Trägerplatte vormontiert werden können, so daß die Voraussetzungen dafür bestehen, mit der ausgerüsteten Trägerplatte eine vorprüfbare Einheit zu erhalten, mit der sämtliche, der Türkarosserie zugeordnete Komponenten getestet werden können.

Erfindungsgemäß wird die Aufgabe durch die kennzeichnenden Merkmale des Patentanspruchs 1 gelöst. Die Unteransprüche geben Vorzugsvarianten der Erfindung an.

Demnach ist zur manuellen Ansteuerung der elektrischen und/oder elektronischen Komponenten wenigstens ein elektrisches, opto-elektrisches, optisches oder magnetisches Schaltelement der Trägerplatte zugeordnet und wenigstens ein mechanisches Betätigungselement der Türinnenverkleidung zugeordnet. Während der manuellen Ansteuerung treten die der Trägerplatte zugeordneten Schaltelemente und die der Türinnenverkleidung zugeordneten Betätigungselemente miteinander in Wirkverbindung. Vorzugsweise sind sämtliche elektrischen und/oder elektronischen Komponenten innerhalb der Türkarosserie auf der Trägerplatte, die den Ausschnitt im Türinnenblech dichtend abdeckt, vormontiert. Deren elektrische Steckverbinder sollten sich ausschließlich auf der Trockenraumseite befinden.

Zwar ist es aus der DE 41 26 318 A1 sowie der DE 41 26 345 C1 bereits bekannt, eine Schaltungsanordnung für Kraftfahrzeuge aus zwei unterschiedlichen Baugruppen zusammenzusetzen, von denen die eine die Betätigungselemente und die andere die Schaltelemente der Schaltungsanordnung umfaßt; jedoch findet sich dort keinerlei Hinweis, wie eine derartige Schaltungsanordnung zur Lösung des vorstehend erwähnten Problems besonders vorteilhaft in eine modular aufgebaute Fahrzeugtür integriert werden kann. Insbesondere findet sich kein Hinweis darauf, gemäß der vorliegenden Erfindung die Schaltelemente der Trägerplatte einer Fahrzeugtür und die zugehörigen Betätigungselemente der Türinnenverkleidung dieser Fahrzeugtür zuzuordnen.

Hierdurch gelingt es, die Türinnenverkleidung freizuhalten von jeglichen elektrischen oder elektronischen Komponenten und dadurch den mit der Verkabelung dieser Komponenten verbundenen Aufwand zu eliminieren sowie die vollständige Vorprüfbarkeit aller für die jeweilige Fahrzeugtür vorgesehenen Komponente zu gewährleisten. Darüber hinaus beeinflußt die aus der Variation des gewünschten Designs resultierende Variantenvielfalt ausschließlich die der Türinnenverkleidung zugeordneten mechanischen Betätigungselemente, die bei der manuellen Ansteuerung der elektrischen Komponenten mit den der Türkarosserie zugeordneten Schaltelementen in Wechselwirkung treten. Es besteht also die Möglichkeit, auch für die manuell anzusteuernden elektrischen und elektronischen Komponenten (z.B. Fensteheber und Sitzverstellung) Standardausführungen einzusetzen, wenn dafür paßfähige Bedienelemente mit dem jeweils gewünschten Design bereitgestellt werden. Weiter Vorteile sind: leichter Montage und Demontage der Türinnenverkleidung, kostengünstigere Reparaturlösungen, keine Überlängen von Kabelsträngen im Vergleich zur Verkabelung elektrischer Komponenten in der Türinnenverkleidung und verringerte Anzahl von Steckverbindern.

Um die Schaltvorgänge bei der manuellen Ansteuerung der Komponenten zu realisieren, können Schaltelemente zur Anwendung kommen, die nach unterschiedlichen physikalischen Prinzipien arbeiten, z.B. unter Ausnutzung elektrischer, magnetischer, optischer oder optoelektrischer Effekte. Besonders verteilhaft ist eine Kombination von Magneten und Hall-Elementen, wobei in den mechanischen Betätigungselementen seitens der Haptik die Magneten und in den basisteilseitigen Schaltelementen (z.B. auf einer Trägerplatte der Türkarosserie oder an einem Sitzgestell) die Hall-Elemente angeordnets sind. Dadurch kann beispielsweise sichergestellt werden, daß kein Berührungskontakt zwischen den Betätigungselementen und den Schaltelementen zum Zwecke der Ansteuerung der elektrischen oder elektronischen Komponenten notwendig wird. Eine derartige Schaltvorrichtung ist schmutzunempfindlich und unempfindlich gegenüber Toleranzen, so daß die Positionierung zwischen den mechanischen Betätigungselementen und den Schaltelementen auf sehr einfache und kostengünstige Weise erfolgen kann.

Wenn eine Verstellung in zwei Richtungen angesteuert oder sensiert werden soll, kommt ein Paar von Hall-Elementen zur Anwendung, die als Schaltelemente fungieren. Diesen ist in einer Mittenposition ein Magnet zugeordnet, der Bestandteil eine schwenkbaren und/oder verschiebbaren Betätigungselements ist. Beim Verschwenken bzw. Verschieben des Betätigungselements aus seiner Nullpunktlage heraus kommt es zum Generieren eines Signals. Nach dem der Bediener das Betätigungselement losläßt, kehrt das Betätigungselement automatisch (z.B. durch eine Federkraft) in die Nullpunktlage zurück.

Gemäß einer Vorzugsvariante der Erfindung sind die elektrischen Verbindungen zwischen der zentralen Steuerelektronik und den elektrischen bzw. elektronischen Komponenten als Einzelleitungsstränge ausgeführt, wobei die Verkabelung in Verbindung mit einer automatischen Anlage zur Kabelkonfektionierung erfolgen sollte. Soweit es durch eine günstige Positionierung der Lage der elektrischen Kontaktstellen der einzelnen Komponenten möglich ist, sollte mit Mitteln der Direktkontaktierung (z.B. durch Löten oder Schneidklemmtechnik) gearbeitet werden.

Durch die Verwendung von Einzelleitungssträngen und durch Direktkontaktierung können sich erhebliche Einsparungen ergeben, da keine teuren Kabelbaumvarianten und zumindest eine reduzierte Anzahl von Steckverbindern erforderlich ist, was nicht nur zur Einsparung vergleichsweise teurer Bauteile sondern auch zu einer Reduzierung des Montageaufwands führt.

Nachfolgend wird die Erfindung anhand eines Ausführungsbeispiels sowie der der dargestellten Zeichnungen näher erläutert. Es zeigen:
- Figur 1: Perspektivische Darstellung einer Trägerplatte mit sämtlichen der Türkarosserie zugeordneten elektrischen und elektronischen Komponenten, darunter ein Schalterblock mit elektrischen Schaltelementen;
- Figur 1A: Schematische Darstellung eines Querschnitts durch die Kraftfahrzeugtür, wobei die von Türaußenblech und Türinnenblech gebildete Türkarosserie, die Trägerplatte für die elektrischen und elektronischen Komponenten sowie die Türinnenverkleidung getrennt voneinander dargestellt sind;
- Figur 2: Perspektivische Explosionsdarstellung einer Kraftfahrzeugtür, bestehend aus einer Türkarosserie mit Türaußen- und Türinnenblech, einer Trägerplatte mit vormontierten elektrischen und elektronischen Komponenten sowie einer Türinnenverkleidung mit einem Block mechanischer Bedienelemente, die mit den an der Trägerplatte montierten elektrischen Schaltelementen in Wirkbeziehung treten können;

- Figur 3: Schematische Schnittdarstellung einer aus (der Trägerplatte zugeordneten) Schaltelementen und (der Türinnenverkleidung zugeordneten) mechanischen Betätigungselementen bestehenden Vorrichtung zur manuellen Ansteuerung von Komponenten, die auf der Trägerplatte vormontiert sind.
- Figur 4: Schematische Darstellung einer Schaltvorrichtung bestehend aus einem Paar stationärer Hall-Elemente und einem zugeordneten Magneten, der mit einem schwenkbaren Betätigungselement in Form eines Zug-/Druckschalters verbunden ist;
- Figur 5: wie Figur 4, jedoch der mit einem Betätigungselement in Form eines Schiebeschalters.

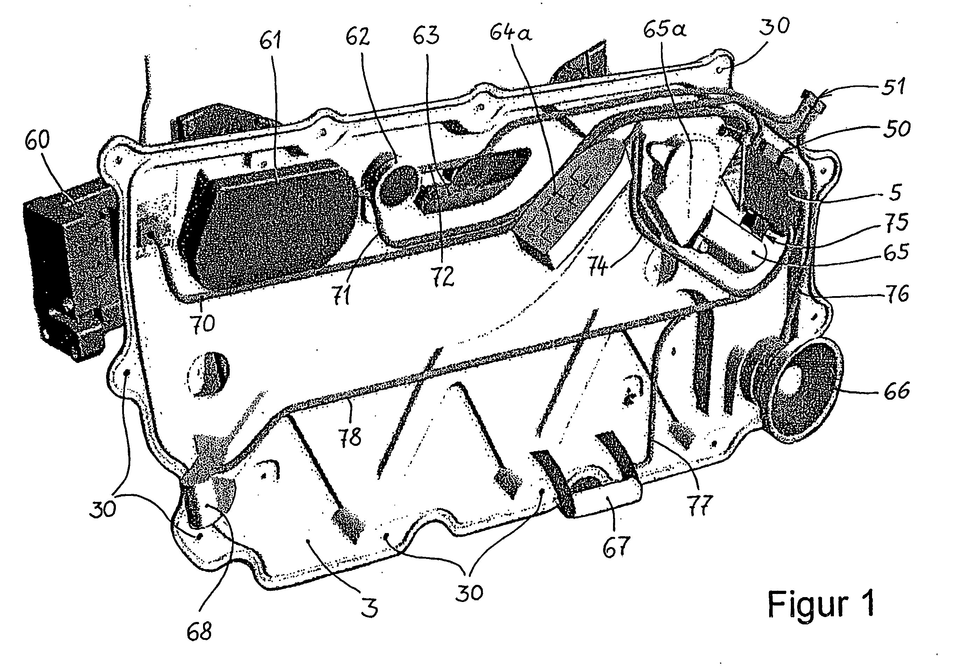

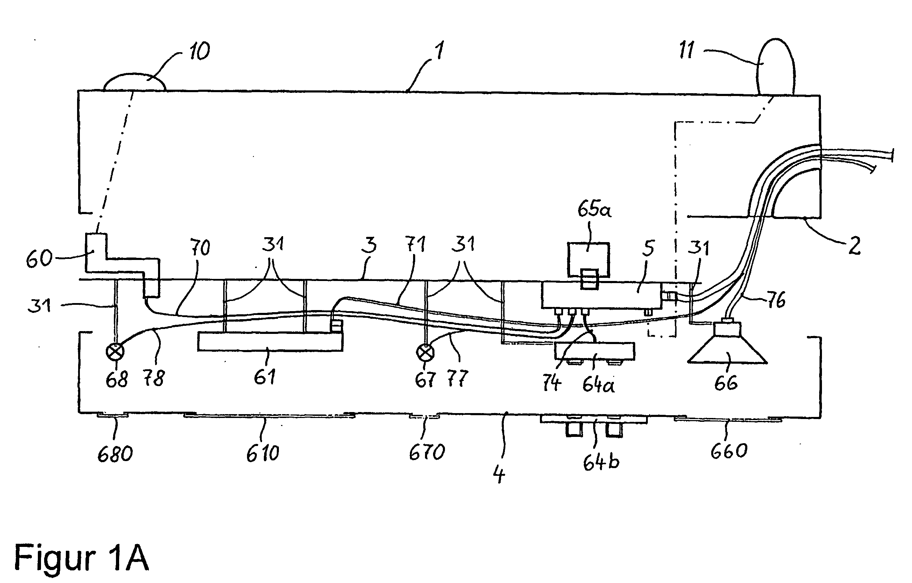

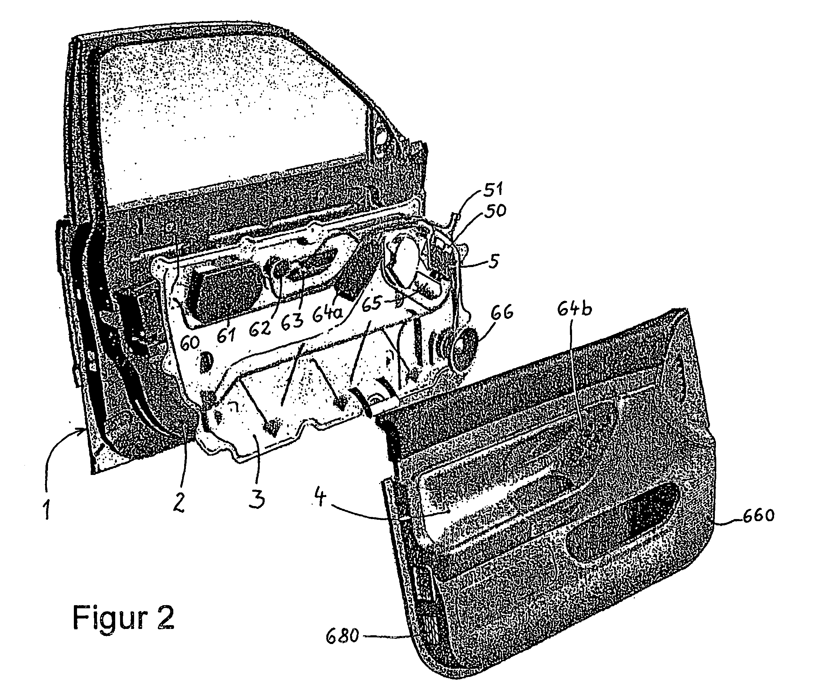

Das Ausführungsbeispiel gemäß den Figuren 1, 1A und 2 zeigt eine Fahrzeugtür mit einem Türaußenblech 1 und einem mit einem großflächigen Ausschnitt versehenen Türinnenblech 2. Der Ausschnitt wird von einer Trägerplatte 3 dichtend abgedeckt, so daß die Türkarosserie in einen zwischen dem Türaußenblech 1 und der Trägerplatte 3 liegenden Naßraum und einen zwischen der Trägerplatte 3 und einer sich daran anschließenden Türinnenverkleidung 4 liegenden Trockenraum aufgeteilt ist. Sämtliche elektrischen und/oder elektronischen Komponenten 5, 60, 61, 62, 64a, 65, 66, 67, 68, die dem Innenraum der Türkarosserie zugeordnet sind, sind auf der Trägerplatte 3 vormontiert. Deren elektrische Steckverbinder 50, 51 befinden sich ausschließlich auf der Trockenraumseite.

Zur Verdeutlichung des Erfindungsprinzips dient die schematische Schnittdarstellung der Fahrzeugtür. Daraus ist gut erkennbar, daß zur Türinnenverkleidung 4 keine elektrischen Verbindungen bestehen. Die als Doppellinien dargestellten Befestigungselemente bzw. Befestigungsstellen 31 sollen andeuten, daß sämtliche elektrischen und/oder elektronischen Komponenten 5, 60, 61, 62, 64a, 65, 66, 67, 68 an der Trägerplatte 3 befestigt. Einzige Ausnahmen hiervon bilden das Türaußenschloß 10, das mit dem Schloß 60 in Verbindung steht, und der Außenspiegel 11, der am Türsteuergerät 5 angeschlossen ist. Der Schalterblock 64a mit den elektrischen (oder andersartigen) Schaltelementen tritt erst nach der Montage der Türinnenverkleidung 4 mit dem Block der mechanischen Betätigungselemente 64b in Wirkverbindung.

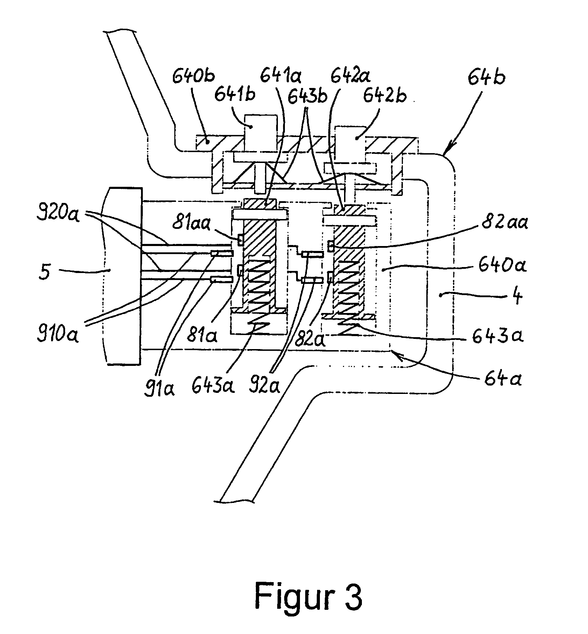

Zur manuellen Ansteuerung der elektrischen und/oder elektronischen Komponenten 5, 60, 61, 62, 64a, 65, 66, 67, 68 ist wenigstens ein elektrisches, opto-elektrisches, optisches oder magnetisches der Trägerplatte 3 zugeordnetes Schaltelement 641a, 642a und wenigstens ein mechanisches der Türinnenverkleidung 4 zugeordnetes Betätigungselement 641 b, 642b vorgesehen. Während der manuellen Ansteuerung treten die der Trägerplatte 3 zugeordneten Schaltelemente 641 a, 642a und die der Türinnenverkleidung 4 zugeordneten Betätigungselement 641 b, 642b miteinander in Wirkverbindung. Die Figuren 3, 4 und 5 zeigen schematisierte Ausführungsbeispiele von manuellen Ansteuerung, bei denen die Haptik von den eigentlichen Schaltelementen trennbar ist.

Für die Wirkungsentfaltung anderer elektrischer Komponenten 61, 62, 66, 67, 68 sind die angrenzenden Bereiche der Türinnenverkleidung in geeigneter Weise gestaltet. D.h., daß dem Sideairbag 61 eine Sollbruchstelle, den Lautsprechern 62, 66 Schallaustrittsöffnungen und der Ausstiegsleuchte 67 sowie der Warnleuchte 68 transparente Lichtaustrittsbereiche zugeordnet sind.

Die schematische Darstellung der Vorrichtung zur Ansteuerung elektrischer und elektronischer Komponenten zeigt einen Ausschnitt einer Kraftfahrzeugtür in dem Bereich der Armlehne, in dem üblicherweise die Schalter zum Ansteuern elektrischer Fensterheber angeordnet sind. Durch eine Öffnung in der Türinnenverkleidung ist das Gehäuse 640b mit den mechanischen Betätigungselementen 641 b, 642b gesteckt. Sie sind als Druckknöpfe ausgeführt, deren obere und untere Endlage durch eine im mittleren Bereich angeformte Krempe begrenzt wird. In der Ruheposition, also ohne Ausübung einer Betätigungskraft, wird die Krempe des Betätigungselements 641 b von der Feder 643b gegen die obere Wandung des Gehäuses 640b gedrückt, so daß es maximal nach oben aus dem Gehäuse 640b herausragt. Der aus dem Gehäuse 640b, nach unten herausragende stiftartige Teil steht dabei mit dem darunterliegenden Schaltelement 641a nicht in Wirkverbindung. Dies erfolgt erst, wenn.durch Niederdrücken des Betätigungselements 642b dessen unteres stiftartiges Teil das zugeordnete, gegen die obere Wandung des Gehäuses 640a des Schalterblocks 64a durch die Feder 643a angefedertes Schaltelement 642a zumindest teiweise niederdrückt.

Auf den Schaltelementen 641 a, 642a sind jeweils zwei voneinander beabstandete Koppelelemente 81 a, 82a angebracht, denen im Gehäuse eingefaßte Koppelelemente 91 a, 92a zugeordnet sind. Die Koppelelemente 91a, 92a können unterschiedliche physikalische Prinzipien nutzen: Sie können z.B. nach dem Prinzip elektrischer Kontaktschalter arbeiten, die bei Berührung der Koppelelemente einen Stromkreis schließen; sie können als optische Elemente (z.B. als Kombination von Spiegel und Lichtleiter) ausgebildet sein, die einen optischen Kreis schließen oder unterbrechen; oder sie können als eine Kombination von Magneten, die auf dem Schaltelement 641 a, 642a plaziert sind, und zugeordneten Hall-Elementen magnetische Wechselwirkungen zur Generierung von Schalteffekten nutzen.

Gemäß des Ausführungsbeispiels von Figur 3 wurde für jedes Schaltelement 641 a, 642a eine Kombination von zwei Koppelelementen 81a, 81aa, 82a, 82aa gewählt, deren axialer Abstand sich vom Abstand der zugeordneten schalterblockseitigen Koppelelemente 91a, 92a unterscheidet. Dadurch ist es möglich, einem Schaltelement drei Zustände zuzuordnen. Der erste Zustand entspricht der neutralen Stellung des Schaltelements 641 a, ohne daß Wechselwirkungen zwischen den Koppeleementen 81a, 81aa, 91a auftreten. Ein zweiter Zustand entspricht einer Zwischenstellung des Schaltelements 642a bei zur Hälfte gedrücktem Betätigungselement 642b, wobei das Koppelelement 82a in Verbindung mit dem zugeordneten Koppelelement 92a ein Signal auslöst. Diese Zwischenstellung kann durch die Verwendung geeigneter Federn hinreichend stabil einstellbar und für den Benutzer fühlbar gestaltet werden. Um den dritten Zustand (nicht dargestellt) zu erreichen, muß das Betätigungselement 642b vollständig gedrückt werden, so daß das Koppelelement 82aa ein zusätzliches Signal auslöst. Für den Fall, daß ein weites Niederdrücken des Schaltelements möglich wäre, so würde das Koppelelement 82a den zugehörigen Kreis wieder unterbrechen und nur der Signalkreis des Koppelelements 82aa bliebe geschlossen. Dies entspräche einem vierten Zustand.

Das Auslösen des ersten Zustandes des Schaltelements 641 a kann beispielsweise mit der Option verbunden sein, die Fensterscheibe in die vorgewählte Richtung nur solange zu verfahren, bis die Betätigung abgebrochen wird. Hingegen könnte das Auslösen des zweiten Zustandes damit verbunden sein, die Fensterscheibe auch dann in die Endlage der vorgegebenen Bewegungsrichtung zu verfahren, wenn die Betätigung zuvor schon abgebrochen wurde. Alternativ kann dieser Zustand auch mit einer anderen, vorzugsweise höheren Verstellgeschindigkeit der Fensterscheibe verbunden sein.

Die elektrische Leitungen 910a, 920a verbinden die Koppelelemente 91a, 92a mit der Steuerelektronik 5, wo die generierten Signale ausgewertet und zur Ansteuerung der entsprechenden elektrischen Komponenten herangezogen werden. Die Koppelelemente 81a, 81aa, 82a, 82aa auf dem beweglichen Schaltelementen 641a, 642a stehen nicht mit elektrischen Leitungen in Verbindung.

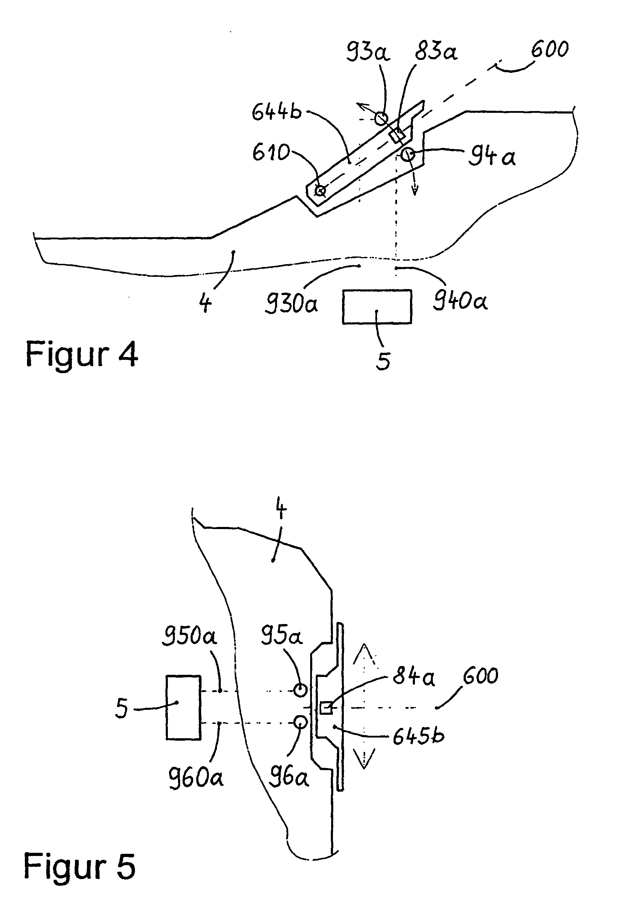

Eine besonders vorteilhafte Ausführung einer Schaltvorrichtung ist in der schematischen Darstellung von Figur 4 angedeutet. Demgemäß sind zwei Hall-Elemente 93a, 94a mit der Steuerelektronik verbunden und liegen bezüglich der Türkarosserie unterhalb der sichtbaren Oberfläche der Türinnenverkleidung 4 fest. Diesen Hall-Elementen 93a, 94a ist ein Magnet 83a zugeordnet, der in ein um die Achse 601 schwenkbar gelagertes Betätigungselement 644b integriert ist. Hall-Elemente 93a, 94a und Magnet 83a liegen bezüglich der Schwenkachse 601 auf dem selben Radius, jedoch in parallelen und zueinander beabstandeten Ebenen.

Befindet sich das Betätigungselement 644b in der dargestellten Nullpunktlage 600, so bestehen keine signalauslösenden Wechselwirkungen zwischen dem Magneten 83a und den Hall-Elementen 93a, 94a. Beim Schwenken des Betätigungselements nach oben oder unten kommt es zu Signalen, die bespielsweise den Fensterheberantrieb in die eine oder andere Richtung ansteuern. Der Vorteil dieser Ausführung gegenüber den weit verbreiteten sogenannten Wippschaltern, die sowohl das Senken als auch das Heben der Fensterscheibe durch Druckbetätigungen auslösen, besteht unter anderem in der höheren Sicherheit gegenüber Fehlbetätigungen. So kann beispielsweise ein Kind, das sich aus einem halbgeöffneten Fenster lehnt und auf das Betätigungselement 644b knieht, lediglich eine Absenkung der Fensterscheibe verursachen. Verletzungen durch Einklemmen sind praktisch ausgeschlossen.

Die in Figur 5 dargestellte Ausführungsvariante zeigt einen kleinen Ausschnitt der Fahrzeugtür in einem im wesentlichen vertikalen Bereich der Türinnenverkleidung unter Verwendung der gleichen technischen Mittel wie in Figur 4 beschrieben. Der Hauptunterschied besteht in der Gestaltung des Betätigungselements 645b, das in Form eines Schiebeschalters ausgeführt ist. Bei seiner Verschiebung aus der Nullpunklage 600 nach oben oder unten bringt er den Magneten 84a in den Einflußbereich des einen oder anderen Hall-Elements 95a, 96a. Die unterhalb der Türinnenverkleidung liegenden Hall-Elemente 95a, 96a bilden eine Ebene, die parallel zu der Verschiebeebene des Magneten 84a liegt.

### Bezugszeichenliste

- 1: Türaußenblech
- 10: Türaußengriff
- 11: Außenspiegel

- 2: Türinnenblech

- 3: Trägerplatte / Türmodul
- 30: Befestigungsstelle
- 31: Befestigungsstelle / Befestigungsmittel

- 4: Türinnenverkleidung

- 5: Steuerelektronik / zentrales Türsteuergerät
- 50: Steckverbinder
- 51: Steckverbinder

- 60: elektrisches Schloß
- 61: Sideairbag
- 62: Lautsprecher (Mitteltöner)
- 63: Türinnengriff
- 64a: Schalterblock mit elektrischen Schaltelementen (z.B. zum Steuern der Fensterheber, der Außenspiegel, der Sitze)

- 64b: Block mit mechanischen Betätigungselementen / Haptik
- 65: Fensterhebermotor
- 65a: Getriebe
- 66: Lautsprecher (Tieftöner)
- 67: Ausstiegsleuchte
- 68: Wamleuchte

- 600: Nullpunktlage
- 601: Schwenkachse
- 610: Abdeckung
- 640a: Gehäuse des Schalterblocks mit (z.B. elektr. oder optischen) Schaltelementen
- 640b: Gehäuse mit mechanischen Bedienelementen
- 641a: Schaltelement
- 641b: mechanisches Betätigungselement
- 642a: Schaltelement
- 642b: mechanisches Betätigungselement
- 643a: Feder
- 643b: Feder
- 644b: mechanisches Betätigungselement / Zug-/Druckschalter
- 645b: mechanisches Betätigungselement / Schiebeschalter
- 660: Abdeckung / Lautsprechergitter
- 670: Abdeckung / transparent
- 680: Abdeckung / transparent

- 70: elektrische Leitung
- 71: elektrische Leitung
- 72: elektrische Leitung
- 74: elektrische Leitung
- 75: elektrische Verbindung / Steckverbinder
- 76: elektrische Leitung
- 77: elektrische Leitung
- 78: elektrische Leitung

- 81a: Koppelelement, z.B. Magnet oder Spiegel
- 82a: Koppelelement, z.B. Magnet oder Spiegel
- 83a: Magnet
- 84a: Magnet

- 91a: Koppelelement, z.B. Hall-Element oder Optokoppler
- 92a: Koppelelement, z.B. Hall-Element oder Optokoppler
- 93a: Hall-Element, Schaltelement
- 94a: Hall-Element, Schaltelement
- 95a: Hall-Element, Schaltelement
- 96a: Hall-Element, Schaltelement

- 910a: Signalleitung, z.B. elektrischer oder Lichtleiter
- 920a: Signalleitung, z.B. elektrischer oder Lichtleiter

- 930a: Signalleitung
- 940a: Signalleitung
- 950a: Signalleitung
- 960a: Signalleitung

## Patentansprüche

1. Fahrzeugtür mit
- einem Türaußenblech (1),
- einem mit einem großflächigen Ausschnitt versehenen Türinnenblech (2), wobei der Ausschnitt von einer Trägerplatte (3) dichtend abgedeckt ist, so daß die Türkarosserie in einen zwischen dem Türaußenblech (1) und der Trägerplatte (3) liegenden Naßraum und einen zwischen der Trägerplatte (3) und einer sich daran anschließenden Türinnenverkleidung (4) liegenden Trockenraum aufgeteilt ist,
- auf der Trägerplatte (3) vormontierten elektrischen und/ oder elektronischen Komponenten (5, 60, 61, 62, 65, 66, 67, 68),
- elektrischen Steckverbindern (50, 51), die auf der Trockenraumseite angeordnet sind, und
- trockenraumseitig angeordneten und auf der Trägerplatte (3) montierten Schaltelementen (641a, 642a, 93a, 94a, 95a, 96a) zur manuellen Ansteuerung der elektrischen und/ oder elektronischen Komponenten (5, 60, 61, 62, 65, 66, 67, 68), wobei zwischen den Schaltelementen und der Türinnenverkleidung (4) keine elektrische Verbindung besteht,
**dadurch gekennzeichnet,**
**daß** wenigstens eines der auf der Trägerplatte (3) montierten Schaltelemente (641a, 642a, 93a, 94a, 95a, 96a) ein elektrisches, opto-elektrisches, optisches oder magnetisches Bauelement ist, dem ein mechanisches, auf der Türinnenverkleidung (4) vorgesehenes Betätigungselement (641b, 642b, 644b, 645b) zugeordnet ist, das mit dem Schaltelement in Wirkverbindung bringbar ist.

2. Fahrzeugtür nach Anspruch 1, **dadurch gekennzeichnet, daß** das wenigstens eine mechanische Betätigungselement (641b, 642b, 644b, 645b) in eine dafür vorgesehene Öffnung der Türinnenverkleidung (4) eingesteckt bzw. eingeklips ist.

3. Fahrzeugtür nach Anspruch 1, **dadurch gekennzeichnet, daß** sämtliche elektrischen und/oder elektronischen Komponenten (5, 60, 61, 62, 64a, 65, 66, 67, 68) sowie deren elektrische Steckverbinder (50, 51, 75) ausschließlich auf der Trockenraumseite angeordnet sind.

4. Fahrzeugtür nach Anspruch 1, **dadurch gekennzeichnet, daß** die elektrischen Verbindungen zwischen den elektrischen und/oder elektronischen Komponenten (60, 61, 62, 64a, 65, 66, 67, 68) einerseits und einer zentralen Steuerelektronik (5) in der Fahrzeugtür andererseits in Form von Einzelleitungssträngen (70, 71, 72, 74, 75, 76, 77, 78) ausgeführt sind.

5. Fahrzeugtür nach Anspruch 1 und 4, **dadurch gekennzeichnet, daß** die Einzelleitungsstränge (70, 71, 74, 77, 78) mit der zentralen Steuerelektronik (5) durch Direktkontaktierung verbunden sind, z.B. mittels Schneidklemmtechnik oder Löten.

6. Fahrzeugtür nach einem der voranstehenden Ansprüche, **dadurch gekennzeichnet, daß** die Haptik Bestandteil der der Türinnenverkleidung (4) zugeordneten Betätigungselemente (641b, 642b, 644b, 645b) ist.

7. Fahrzeugtür nach einem der voranstehenden Ansprüche, **dadurch gekennzeichnet, daß** die Schaltelemente optische Schaltelemente sind und über Lichtwellenleiter mit einer zentralen Steuerelektronik in Verbindung stehen, um die optischen Signale in elektrische Signale zu wandeln und auszuwerten.

8. Fahrzeugtür nach einem der voranstehenden Ansprüche, **dadurch gekennzeichnet, daß** als Schaltelemente Hall-Elemente (93a, 94a, 95a, 96a) zum Einsatz kommen, die bezüglich des Basisteils (Trägerplatte 3) stationär angeordnet sind, und daß den Hall-Elementen (93a, 94a, 95a, 96a) Magnete (83a, 84a) in den mechanischen Betätigungselementen (644b, 645b) zugeordnet sind, die bei einer Lageveränderung ein Steuersignal generieren.

9. Vorrichtung nach Anspruch 8, **dadurch gekennzeichnet, daß** jedem Magneten (83a, 84a) ein Paar Hall-Elemente (93a, 94a, 95a, 96a) zugeordnet ist und daß sich der Magnet (83a, 84a) bei Nullpunktlage (600) des Betätigungselements (644b, 645b) in einer Mittenposition zwischen dem zugeordneten Paar Hall-Elemente (93a, 94a, 95a, 96a) befindet.

10. Vorrichtung nach einem der voranstehenden Ansprüche, **dadurch gekennzeichnet, daß** das Betätigungselement (644b) um eine Achse (601) schwenkbar ausgebildet ist, wobei die Hall-Elemente (93a, 94a) und der Magnet (83a) auf einem gemeinsamen Radius zur Schwenkachse (601) liegen.

11. Vorrichtung nach Anspruch 8, **dadurch gekennzeichnet, daß** das Betätigungselement (645b) entlang einer Ebene verschiebbar ausgebildet ist, die parallel zu der Ebene verläuft, in der die Hall-Elemente (95a, 96a) liegen.

12. Vorrichtung nach einem der voranstehenden Ansprüche, **dadurch gekennzeichnet, daß** das Betätigungselement sowohl schwenkbar als auch verschiebbar ausgebildet ist.

## Claims

1. Vehicle door with
- a door outside panel (1),
- a door inside panel (2) provided with a large surface cut-out recess, wherein the recess is covered in sealed manner by a support plate (3) so that the door body is divided into a wet cell lying between the door outside panel (1) and the support plate (3), and a dry cell lying between the support plate (3) and an adjoining door inside trim (4),
- electrical and/or electronic components (5, 60, 61, 62, 65, 66, 67, 68) prefitted on the support plate,
- electrical plug connectors (50, 51) which are arranged on the dry cell side, and
- switch elements (641a, 642a, 93a, 94a, 95a, 96a) arranged on the dry cell side and mounted on the support plate (3) for manually controlling the electrical and/or electronic components (5, 60, 61, 62, 65, 66, 67, 68) wherein no electrical connection exists between the switch elements and the door inside trim,
**characterised in that**
at least one of the switch elements (641a, 642a, 93a, 94a, 95a, 96a) mounted on the support plate (3) is an electrical, opto-electrical, optical, or magnetic structural element to which is assigned a mechanical operating element (641b, 642b, 644b, 645b) which is provided on the door inside trim (4) and can be brought into active connection with the switch element.

2. Vehicle door according to claim 1 **characterised in that** the at least one mechanical operating element (641b, 642, 644b, 645b) can be pushed or clipped into an opening provided for this purpose in the door inside trim (4).

3. Vehicle door according to claim 1 **characterised in that** all the electrical and/or electronic components (5, 60, 61, 62, 64a, 65, 66, 67, 68) as well as their electrical plug connectors (50, 51, 75) are arranged solely on the dry cell side.

4. Vehicle door according to claim 1 **characterised in that** the electrical connections between the electrical and/or electronic components (60, 61, 62, 64a, 65, 66, 67, 68) on one side and a central control electronics (5) in the vehicle door on the other side are designed in the form of individual leads (70, 71, 72, 74, 75, 76, 77, 78).

5. Vehicle door according to claim 1 and 4 **characterised in that** the individual leads (70, 71, 74, 77, 78) are connected to the central control electronics (5) through direct contacting, e.g. by means of cut-clamp technology or soldering.

6. Vehicle door according to one of the preceding claims **characterised in that** the user interface is a component part of the operating elements (641b, 642b, 644b, 645b) assigned to the door inside trim (4).

7. Vehicle door according to one of the preceding claims **characterised in that** the switch elements are optical switch elements and are connected to a central control electronics through light wave conductors in order to convert the optical signals into electrical signals and evaluate same.

8. Vehicle door according to one of the preceding claims **characterised in that** as switch elements Hall sensors (93a, 94a, 95a, 96a) are used which are arranged stationary in relation to the base part (support plate 3), and that to the Hall sensors (93a, 94a, 95a, 96a) are assigned magnets (83a, 84a) in the mechanical operating elements (644b, 645b) which generate a control signal in the event of a change in position.

9. Device according to claim 8 **characterised in that** a pair of Hall sensors (93a, 94a, 95a, 96a) is assigned to each magnet (83a, 84a), and that in the event of a neutral position (600) of the operating element (644b, 645b) the magnet (83a, 84a) is located in a central position between the associated pair of Hall sensors (93a, 94a, 95a, 96a).

10. Device according to one of the preceding claims **characterised in that** the operating element (644b) is formed to swivel about an axis (601) wherein the Hall sensors (93a, 94a) and the magnet (83a) lie on a common radius relative to the swivel axis (601).

11. Device according to claim 8 **characterised in that** the operating element (645b) is formed displaceable along a plane which runs parallel to the plane in which the Hall sensors (95a, 96a) are located.

12. Device according to one of the preceding claims **characterised in that** the operating element is formed for both swivel and displacement movement.

## Revendications

1. Portière de véhicule comportant
- une tôle extérieure de portière (1),
- une tôle intérieure de portière (2), ayant une découpe de surface étendue, la découpe étant recouverte d'une manière étanche par une plaque de support (3) de sorte que la carrosserie de la portière est divisée en un espace humide situé entre la tôle extérieure de portière (1) et la plaque de support (3) et en un espace sec situé entre la plaque de support (3) et un habillage intérieur de portière (4) qui s'y raccorde,
- des composants électriques et/ou électroniques (5, 60, 61, 62, 65, 66, 67, 68) préassemblés sur la plaque de support (3),
- des connecteurs électriques (50, 51), qui sont disposés du côté de l'espace sec, et
- des éléments de commutation (641a, 642a, 93a, 94a, 95a, 96a) disposés du côté de l'espace sec et montés sur la plaque de support (3) et servant à commander manuellement les composants électriques et/ou électroniques (5, 60, 61, 62, 65, 66, 67, 68), aucune liaison électrique n'étant présente entre les éléments de commutation et l'habillage intérieur de portière (4),
**caractérisée en ce que**
au moins l'un des éléments de commutation (641a, 642a, 93a, 94a, 95a, 96a) monté sur la plaque de support (3) est un composant électrique, optoélectrique, optique ou magnétique, auquel est associé un élément mécanique d'actionnement (641b, 642b, 644b, 645b) prévu sur l'habillage intérieur de portière (4) et qui peut être amené à coopérer avec l'élément de commutation.

2. Portière de véhicule selon la revendication 1, **caractérisée en ce que** le au moins un élément d'actionnement mécanique (641b, 642b, 644b, 645b) est enfiché ou clipsé dans une ouverture prévue de l'habillage intérieur de portière (4).

3. Portière de véhicule selon la revendication 1, **caractérisée en ce que** tous les composants électriques et/ou électroniques (5, 60, 61, 62, 64a, 65, 66, 67, 68) ainsi que leurs connecteurs électriques (50, 51, 75) sont disposés exclusivement du côté de l'espace sec.

4. Portière de véhicule selon la revendication 1, **caractérisée en ce que** les liaisons électriques entre les composants électriques et/ou électroniques (5, 60, 61, 62, 64a, 65, 66, 67, 68) d'une part et une unité centrale de commande électronique (5) dans la portière de véhicule d'autre part sont réalisés sous la forme de faisceaux de lignes individuelles (70, 71, 72, 74, 75, 76, 77, 78).

5. Portière de véhicule selon les revendications 1 et 4, **caractérisée en ce que** les faisceaux de lignes individuelles (70, 71, 74, 77, 78) sont reliés à l'unité électronique centrale de commande (5) par l'établissement d'un contact direct, par exemple par une technique de serrage avec découpage ou par brasage.

6. Portière de véhicule selon l'une des revendications précédentes, **caractérisée en ce que** l'élément haptique fait partie des éléments d'actionnement (641b, 642b, 644b, 645b) prévus sur l'habillage intérieur de portière (4).

7. Portière de véhicule selon l'une des revendications précédentes, **caractérisée en ce que** les éléments de commutation sont des éléments de commutation optiques et sont reliés par l'intermédiaire de guides d'ondes lumineuses à une unité électronique centrale de commande, de manière à convertir les signaux optiques en signaux électriques et à les évaluer.

8. Portière de véhicule selon l'une des revendications précédentes, **caractérisée en ce qu'**on utilise comme éléments de commutation, des éléments à effet Hall (93a, 94a, 95a, 96a), qui sont montés fixes par rapport à la partie de base de la plaque de support (3) et qu'aux éléments à effet Hall (93a, 94a, 95a, 96a) sont associés des aimants (83a, 84a) situés dans les éléments d'actionnement mécaniques (644, 645b), qui génèrent un signal de commande dans le cas d'un changement de position.

9. Dispositif selon la revendication 8, **caractérisé en ce qu'**à chaque aimant (83a, 84a) est associée une paire d'éléments à effet Hall (93a, 94a, 95a, 96a) et **en ce que** lorsque l'élément d'actionnement (644b, 645b) est dans la position de zéro (600), l'aimant (83a, 84a) est situé dans une position médiane entre la paire associée d'éléments à effet Hall (93a, 94a, 95a, 96a).

10. Dispositif selon l'une des revendications précédentes, **caractérisé en ce que** l'élément d'actionnement (644a) est agencé de manière à pouvoir pivoter autour d'un axe (601), les éléments à effet Hall (93a, 94a) et l'aimant (83a) étant situés sur un rayon commun par rapport à l'axe de pivotement (601).

11. Dispositif selon la revendication 8, **caractérisé en ce que** l'élément d'actionnement (645b) est agencé de manière à être déplaçable le long d'un plan, qui s'étend parallèlement au plan dans lequel sont situés les éléments à effet Hall (95a, 96a).

12. Dispositif selon l'une des revendications précédentes, **caractérisé en ce que** l'élément d'actionnement est agencé tant à capacité de pivotement qu'à capacité de déplacement.
